# EUROPÄISCHE PATENTSCHRIFT

(11) **EP 2 289 222 B1**
(45) Veröffentlichungstag und Bekanntmachung des Hinweises auf die Patenterteilung: **03.07.2019**
(21) Anmeldenummer: 09749495.9
(22) Anmeldetag: 22.05.2009
(51) Int. Cl.: H04L 29/06, H04L 9/32, G06F 21/33

(54) **VERFAHREN, AUTHENTIKATIONSSERVER UND DIENSTESERVER ZUM AUTHENTIFIZIEREN EINES CLIENT**
METHOD, AUTHENTICATION SERVER AND SERVICE SERVER FOR AUTHENTICATING A CLIENT
PROCÉDÉ, SERVEUR D'AUTHENTIFICATION ET SERVEUR PRESTATAIRE DE SERVICES POUR L'AUTHENTIFICATION D'UN CLIENT

(30) Priorität: 23.05.2008 DE 102008024783
(43) Veröffentlichungstag der Anmeldung: 02.03.2011
(73) Patentinhaber: Deutsche Telekom AG, 53113 Bonn (DE)
(72) Erfinder: SCHWENK, Jörg, 59505 Bad Sassendorf (DE); GAJEK, Sebastian, Ramat Aviv, Tel Aviv 69978 (IL); MANULIS, Mark, 64289 Darmstadt (DE); JAGER, Tibor, 42551 Velbert (DE)
(74) Vertreter: Griepenstroh, Jörg
(86) Internationale Anmeldenummer: PCT/DE2009/000714
(87) Internationale Veröffentlichungsnummer: WO 2009/140953

(56) Entgegenhaltungen:
- EP-B- 1 405 490
- WO-A-00/69110
- US-A1- 2008 052 775
- US-B2- 7 353 383
- SCHNEIER B ED - SCHNEIER B: "Applied Cryptography, Protocols, Algorithms, and Source Code in C" APPLIED CRYPTOGRAPHY, PROTOCOLS, ALGORITHMS, AND SOURCE CODE IN C, JOHN WILEY & SONS, INC, NEW YORK, 1. Januar 1996 (1996-01-01), Seiten 47-65,566, XP002230276 ISBN: 978-0-471-11709-4
- YANG ET AL:[Online] 1. Januar 2002 (2002-01-01), XP002543965 Gefunden im Internet: URL:http://www.springerlink.com/content/7h 94y1tw0a8tw6fv/fulltext.pdf> [gefunden am 2009-08-31]
- GAJEK SEBASTIAN ET AL: "A Browser-Based Kerberos Authentication Scheme", 6 October 2008 (2008-10-06), PROC. INT.CONF. ADV. BIOMETRICS (ICB); [LECTURE NOTES IN COMPUTER SCIENCE; LECT.NOTES COMPUTER], SPRINGER, BERLIN, HEIDELBERG, PAGE(S) 115 - 129, XP047393815, ISBN: 978-3-642-17318-9

## Beschreibung

### Gebiet der Erfindung.

Die Erfindung betrifft ein Verfahren zum Authentifizieren eines Client gegenüber einem Diensteserver. Unter Diensteserver wird hier ein Server verstanden, der einen Anwendungsdienst selbst bereitstellt oder einen Zugang zu einem Anwendungsdienst vermittelt.

### Stand der Technik.

Single-Sign-On-Systeme (Einmalanmeldungssysteme) ermöglichen, dass ein Client (Nutzer) eine Registrierung nur einmal durchzuführen braucht, um danach seine Identität bei mehreren Diensteservern (Ressourcenlieferanten, Dienstleistern) mit geringerem Aufwand beweisen zu können. Eine Registrierung in so einem System wird deshalb als Einmalanmeldung (single-sign-on = SSO) bezeichnet. Bei der Registrierung stellt ein Authentifizierer (authenticator) ein Zertifikat (Ausweis) aus. Der Authentifizierer ist eine vertrauenswürdige Instanz, welcher mindestens ein Diensteserver vertraut. Ein Zertifikat enthält in der Regel mindestens ein Sicherheitsmerkmal, anhand dessen der Diensteserver die Echtheit des von dem Client vorgelegten Zertifikates überprüfen kann. Außerdem enthält ein Zertifikat in der Regel mindestens ein Identitätsmerkmal, anhand dessen erkennbar ist, welchem Client das Zertifikat zuzuordnen ist, d.h. welcher Client berechtigt ist, sich mit dem Zertifikat auszuweisen. Das Zertifikat kann so aufgebaut sein, dass weder das mindestens eine Sicherheitsmerkmal noch das mindestens eine Identitätsmerkmal verändert werden kann, ohne dass die Änderung an dem Zertifikat erkennbar ist.

Im elektronischen Verkehr kann eine Überprüfung einer vorgegebenen Urheberschaft konzeptionell besonders anspruchsvoll sein. Gründe hierfür sind unter anderem: Ein Client kann dem Diensteserver im elektronischen Verkehr kein physisches Zertifikat mit physischen Sicherheitsmerkmalen, sondern nur ein Zertifikat in Gestalt eines Bitmusters vorlegen, das fehlerfrei - und soweit für einen Dritten überhaupt zugänglich - von einem Dritten unbemerkt kopiert werden kann. Eine Übertragung der Daten zwischen Client und einem Diensteserver kann auf Übertragungswegen (wie Internet) stattfinden, die sowohl hinsichtlich Abhörens als auch hinsichtlich eines Veränderns zu übertragender Daten als auch hinsichtlich der Identität der sendenden Seite (Person) als nicht vertrauenswürdig angesehen werden können.

Es wurden Protokolle entwickelt, die sitzungsindividuell einen manipulationsgeschützten Datenverkehr zwischen Client und Server (wie Authentikationsserver und Diensteserver) ermöglichen. Ein solches Protokoll ist SSL/TLS. Die Sicherheit solcher Protokolle beruht auf einer Nutzung des Public-Key-Verfahrens, in welchem die sendende Seite zum abhörsicheren Verschlüsseln einen öffentlichen Schlüssel der empfangenden Seite verwendet. So eine Verschlüsselung gegen Abhören kann ad-hoc und ohne Mitwirkung eines vertrauenswürdigen Dritten, der eine Erstregistrierung des Clients durchgeführt hat, durchgeführt werden. Außerdem kann das Verschlüsselungsverfahren sowohl für einen Uplink als auch für einen Downlink einer bidirektionalen Verbindung zwischen Client und Server angewendet werden. Da Public-Key-Verfahren rechenintensiv sind, werden sie in der Regel dazu verwendet, zu Sitzungsbeginn einen vertrauenswürdigen Übertragungskanal für einen Austausch eines symmetrischen Sitzungsschlüssels zur Durchführung eines ressourcenschonenden, symmetrischen, nichtöffentlichen Verschlüsselungsverfahrens bereitzustellen.

Alternativ oder zusätzlich kann die sendende Seite ihren nichtöffentlichen Schlüssel zum Signieren verwenden, so dass die empfangende Seite eine vorgegebene Urheberschaft (Echtheit) der Nachricht mit einem öffentlichen Schlüssel der sendenden Seite überprüfen kann. Auch Signieren erfolgt mittels Verschlüsselung der Nachricht, und zwar etwa so wie die oben beschriebene Verschlüsselung zum Verbergen einer zu übertragenden Nachricht. Da Signieren ein anderes Ziel hat, nämlich dem Empfänger einer Nachricht zu ermöglichen, eine vorgegebene Urheberschaft für die Nachricht zu prüfen, wird für das Signieren jedoch nicht der öffentliche, sondern der nichtöffentliche Schlüssel der sendenden Seite verwendet. Zum Überprüfen der Urheberschaft der sendenden Seite für die Nachricht entschlüsselt die sendende Seite die Nachricht mit dem öffentlichen Schlüssel der sendenden Seite.

Wenn ein Teil der Nachricht mit zuvor Vereinbartem oder dafür Standardisiertem übereinstimmt oder zumindest lesbar ist, kann die sendende Seite daraus schließen, dass die Nachricht mit dem nichtöffentlichen Schlüssel des vorgeblichen Urhebers verschlüsselt wurde. Dies kann bei einem vertraulich verwahrten nichtöffentlichen Schlüssel nur derjenige sein, dem der öffentliche Schlüssel zugeordnet ist, mit dem die empfangende Seite das signierte Vereinbarte, das signierte Standardisierte bzw. die signierte Nachricht zwecks Überprüfung der Urheberschaft entschlüsselt hat.

Hat die Entschlüsselung mit dem öffentlichen Schlüssel nicht das vereinbarte, standardisierte bzw. zumindest lesbare Ergebnis, kann die empfangende Seite daraus schließen, dass die tatsächlich sendende Seite die Nachricht nicht mit dem nichtöffentlichen Schlüssel der vorgeblich sendenden Seite verschlüsselt hat. Die empfangende Seite kann dann mit Recht bezweifeln, dass die tatsächlich sendende Seite nicht mit der vorgeblich sendenden Seite identisch ist. Die Überprüfung der Urheberschaft (Urheber-Echtheit) der Nachricht hat dann also zu dem Ergebnis geführt, dass die empfangende Seite der Nachricht deshalb nicht vertrauen kann, weil fraglich ist, ob sie tatsächlich von demjenigen versendet wurde, der vorgegeben hat, sie versendet zu haben. Auch dieses Verfahren kann quasigleichzeitig sowohl für den Uplink als auch für den Downlink einer bidirektionalen Verbindung zwischen Client und Server angewendet werden. Für die Urheberschaftsprüfung benötigt die empfangende Seite allerdings eine vertrauenswürdige Quelle für die Zuordnung zwischen der Identität der sendenden Seite und dem öffentlichen Schlüssel der sendenden Seite. Diese Zuordnung kann in einem Zertifikat enthalten sein. Eine konventionelle Möglichkeit besteht darin, dass sich die empfangende Seite den öffentlichen Schlüssel von einem Aussteller für elektronische Zertifikate beschafft, dem die empfangende Seite vertraut, und zwar online oder offline auf einem vertrauenswürdigen Weg, dem die empfangende Seite Vertrauen schenkt.

Schneier, B., "Applied Cryptography, Protocols, Algorithms ...", ISBN 978-0-471-11709-4, Seiten 47 - 65 und 566 - 570, beschreibt die Verfahren 'Wide-Mouth Frog', 'Otway-Rees' und 'Woo-Lam', in denen ein Berechtigungsnachweis eines Authentikationsserver 'Trent' nicht über den Client 'Alice', sondern direkt an den Diensteserver 'Bob' übermittelt wird. Bei den Verfahren Needham-Schroeder und Kerberos enthält der von Trent erzeugte und über Alice an Bob weitergeleitete Berechtigungsnachweis den Namen von Alice und einen zufälligen Sitzungsschlüssel, der von Trent erzeugt wurde. Bei den Verfahren Kerberos und Neuman-Stubblebine enthält der Berechtigungsnachweis zusätzlich noch einen Zeitstempel, der bei Kerberos von Trent und bei Neuman-Stubblebine von Bob erzeugt wurde. Beim Verfahren Denning-Sacco enthält der von Trent erzeugte und über Alice an Bob weitergeleitete Berechtigungsnachweis kein verbindungs-, sitzungs- oder kanalbezogenes Geheimnis. Beim Verfahren Yahalom erhält Bob den Berechtigungsnachweis von Trent über Alice mittels einer ersten Nachricht. Alice erzeugt und sendet Bob zur Bestätigung eine zweite Nachricht, zu deren Erzeugung Alice eine Zufallszahl kennen muss, die ihr Bob zu Anfang des Dialogs zugesendet hat. Außerdem muss Alice in der Lage sein, eine an sie gerichtete Nachricht von Trent mit einem Schlüssel, den sie (ausschließlich) mit Trent teilt, zu entschlüsseln.

Yang et al., XP002543965, beschreibt ein authentifiziertes Login mittels eines CrossCookies. Ein erster Web Server sendet ein CrossCookie an den Client. Der Client verwendet das CrossCookie gegenüber einem zweiten Web Server als Berechtigungsnachweis, um von dem zweiten Web Server eine Webseite angezeigt zu bekommen. Das CrossCookie wird von dem ersten Web Server mit einem privaten Schlüssel des ersten Web Servers signiert.

US 7,353,383 B2 beschreibt einen Verfahrensschritt, in dem ein Browser ein Sitzungsschlüsselpaar erzeugt. Im Allgemeinen ist dieses Schlüsselpaar ein zufälliges Schlüsselpaar. In einem nächsten Verfahrensschritt wird eine erste Zufallszahl (nonce0) erzeugt. Die erste Zufallszahl sind zufällige Daten, die für jeden Client Browser unterschiedlich sind. Wenn der Browser im nächsten Schritt feststellt, dass er noch keine gültige Sitzungsberechtigung (session credential) von der Sitzungsautorität hat, speichert der Browser im nächsten Schritt die Adresse der angeforderten Ressource in einen Kellerspeicher (stack) und erzeugt eine Zertifikatsanfragekennung, welche eine browserspezifische Zahl darstellt. In einem weiteren Schritt ruft er die Anfragedetails für die Ressource auf, welche zuvor in dem Kellerspeicher zwischengespeichert wurden. In einem weiteren Schritt erzeugt der Client Browser einen *Message Authenticity Code* (MAC), der zeigt, dass der Client Browser im Besitz des Sitzungsschlüssels ist, der in dem ersten Schritt erzeugt wurde. Es wird vorgeschlagen, dass der Browser eine digitale Signatur über einen gesamten Abfrageinhalt zuzüglich der ersten Zufallszahl (nonce0) und einer weiteren Zufallszahl (nonce3) berechnet. Damit soll eine hundertprozentige Nichtabstreitbarkeit der Anfrage an den Content-Server erreicht werden. Die beiden Zufallszahlen (nonce0, nonce3) werden mittels eines Lesens aus einem Kellerspeicher für eine weitere Verwendung zurückgewonnen, nachdem das Berechtigungszertifikat bereits von der Sitzungsautorität zum Browser übertragen worden ist.

US2008/0052775A1 beschreibt ein Schlüsselverteilzentrum, das ein KT_Cookie erzeugt und mit Bobs geheimem Schlüssel verschlüsselt.

So beschreibt EP 1 405 490 B1 ein Verfahren für einen Dienstprozess zur Bereitstellung eines Dienstes für einen Client. Das Verfahren umfasst unter anderem folgende Schritte a bis e: a) Senden eines Token, der von einem Authentifizierungsprozess erzeugt wurde, an den Client; b) Senden des Token von dem Client an den Dienstprozess zur Bereitstellung eines Dienstes für den Client; c) Senden des Token, den der Dienstprozess von dem Client erhalten hat, an den Authentifizierungsprozess; d) Prüfen des weitergeleiteten Token durch den Authentifizierungsprozess und e) Senden einer autorisierten Dienstanforderung an den Dienstprozess, wenn das Prüfen des weitergeleiteten Token ergeben hat, dass eine Gültigkeitsdauer des Token in Ordnung ist.

WO00/69110 beschreibt ein Verfahren zum Authentifizieren eines Anfragenden. Das Verfahren umfasst folgende Schritte a bis d: a) Erzeugen einer Sitzung (session) durch einen Login-Server; b) direkter Nachrichtenaustausch zwischen einem Anwendungsserver und dem Login-Server, um eine Autorisierung des Anfragenden unter Berücksichtigung eines temporären Kennzeichens zu prüfen.

### Überblick über die Erfindung.

Die beiden letztgenannten konventionellen Verfahren sehen drei direkte Nachrichtenaustauschwege (Verbindungen) vor: erstens zwischen einem Kunden und einer Vorrichtung (Anwendungsserver), welche eine Ressource für den Kunden bereitstellt; zweitens zwischen einer Vorrichtung (Authentikations- bzw. Login-Server), welche eine Berechtigung des Kunden zur Inanspruchnahme der Ressource prüft und drittens zwischen der Vorrichtung (Anwendungsserver), die die Ressource für den Kunden bereitstellt und der Vorrichtung (Authentikation- bzw. Login-Server), welche die Berechtigung des Kunden zur Inanspruchnahme der Ressource prüft.

Konventionelle Authentikationsverfahren sind aufgrund einer Komplexität solcher "Dreiecksbeziehungen" aufwändig im täglichen Betrieb. Es ist eine Aufgabe der vorliegenden Erfindung, ein Authentikationsverfahren bereitzustellen, das mit geringerem Aufwand zu betreiben ist. Aus zeitlichen und aus Aufwandsgründen werden im elektronischen Verkehr Verfahren bevorzugt, in denen ein Client im Zuge einer Antragstellung (eines sign-on) das elektronische Zertifikat vom Zertifikatsaussteller gleich "mitbringt", etwa so wie im nichtelektronischen Leben, wenn jemand mit seinem Personalausweis oder einer notariell beglaubigten Urkunde zu einer Behörde oder einer Bank geht.

### Figurenkurzbeschreibung.

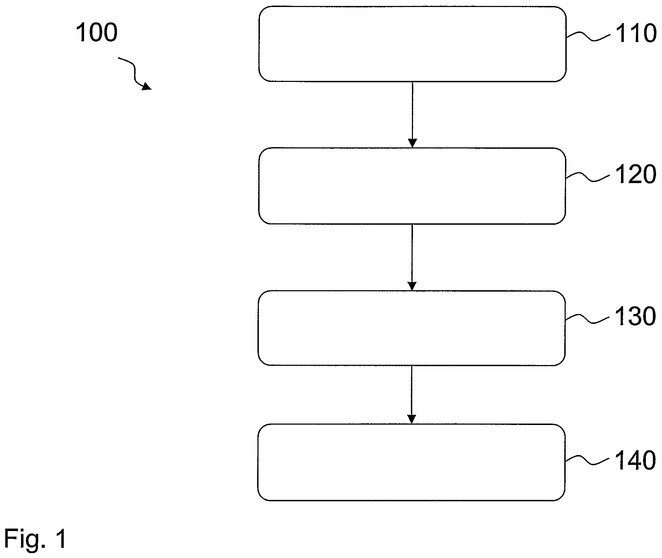

- Fig. 1: zeigt schematisch ein Flussdiagramm einer ersten Ausführungsform eines Verfahrens zum Authentifizieren eines Kunden gegenüber einem Dienstleister.

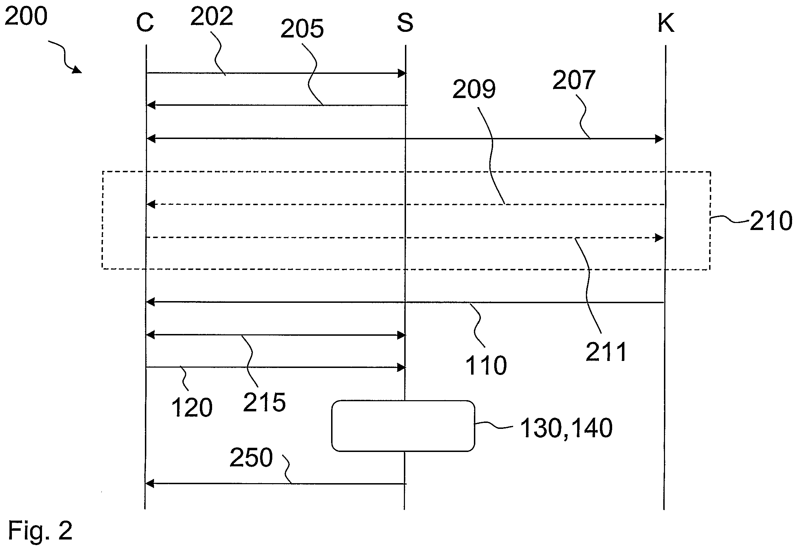

- Fig. 2: zeigt schematisch eine Übersicht über einen Nachrichtenaustausch einer zweiten Ausführungsform eines Verfahrens zum Authentifizieren eines Kunden gegenüber einem Dienstleister, wobei vor dem Übermitteln des Authentikationstokens von dem Authentikationsserver an den Kunden eine Login-Abfrage zwischen Kunde und Authentikationsserver durchgeführt wird.

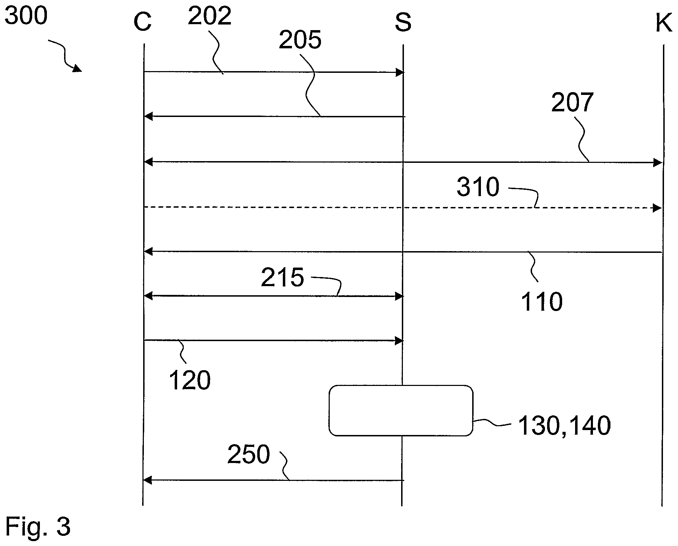

- Fig. 3: zeigt schematisch eine Übersicht über einen Nachrichtenaustausch einer dritten Ausführungsform eines Verfahrens zum Authentifizieren eines Kunden gegenüber einem Dienstleister, wobei der Kunde vor dem Übermitteln des Authentikationstokens von dem Authentikationsserver an den Kunden dem Authentikationsserver ein Kundenzertifikat und eine digitale Signatur übermittelt.

Detaillierte Beschreibung von Ausführungsformen.

Fig. 1 zeigt ein erstes Verfahren 100 zum Authentifizieren eines Client C gegenüber einem Diensteserver S. Das Verfahren kann folgende Schritte umfassen: Übermitteln eines Authentikationstokens c von einen Authentikationsserver K an den Client C (Schritt 110), Übermitteln des Authentikationstokens c von dem Client C an den Diensteserver S (Schritt 120), Überprüfen des Authentikationstokens c durch den Diensteserver S (Schritt 130) und Entscheiden über eine Freigabe oder Nichtfreigabe der angeforderten Ressource unter Berücksichtigung eines Ergebnisses des Überprüfens durch den Diensteserver S (Schritt 140).

Fig. 2 zeigt ein zweites Verfahren 200 zum Authentifizieren eines Client C gegenüber einem Diensteserver S. In diesem Verfahren kann vor dem Übermitteln des Authentikationstokens c von dem Authentikationsserver K an den Client C (Schritt 110) eine Login-Abfrage zwischen Client C und Authentikationsserver K durchgeführt werden (Schritt 210).

Fig. 3 zeigt ein drittes Verfahren 300 zum Authentifizieren eines Client C gegenüber einem Diensteserver S. In diesem Verfahren kann der Client C vor dem Übermitteln des Authentikationstokens c von dem Authentikationsserver K an den Client C (Schritt 110) dem Authentikationsserver K ein Clientzertifikat certC und eine digitale Signatur dS übermitteln (Schritt 310).

Erfindungsgemäß wird in jedem der beschriebenen Verfahren der Authentikationsserver K vor dem Übermitteln des Authentikationstokens c an den Client C das Authentikationstoken c an ein Geheimnis cid kryptographisch gebunden, das sich der Client C und der Authentikationsserver K teilen.

In jedem der beschriebenen Verfahren kann vorgesehen sein, dass der Authentikationsserver K vor dem Übermitteln des Authentikationstokens c die digitale Signatur dS unter Berücksichtigung eines Clientzertifikates certC überprüft. Es kann vorgesehen sein, dass das Authentikationstoken c nur dann an den Client C übermittelt wird, wenn das Überprüfen der digitalen Signatur dS eine Echtheit der digitalen Signatur dS bestätigte.

In jedem der beschriebenen Verfahren kann der Authentikationsserver K vor dem Übermitteln des Authentikationstokens c an den Client C das Authentikationstoken c an einen öffentlichen Schlüssel pKC des Client C kryptographisch binden.

Das Geheimnis cid umfasst eine Kanalidentität und/oder eine Sitzungsidentität. Zusätzlich ist das Geheimnis cid mittels eines interaktiven Protokolls synchronisiert. Zusätzlich ist das Geheimnis cid von einem Hauptgeheimnis (master secret) abgeleitet. Das Hauptgeheimnis wird als Ausgangspunkt (seed) für eine Pseudozufallsfunktion benutzt werden.

Die Login-Abfrage zwischen Client C und Authentikationsserver K, das Übermitteln des Clientzertifikates certC und der digitalen Signatur dS von dem Client C zu dem Authentikationsserver K, das Überprüfen der digitalen Signatur dS durch den Authentikationsserver K, das kryptographische Binden des Authentikationstokens c an den öffentlichen Schlüssel pKC des Clients C und/oder das Übermitteln des Authentikationstokens c an den Client C kann mittels einer Middleware erfolgen, welche einen Client C und/oder einen Authentikationsserver S mittels kryptographischer Werte authentifizieren kann, die in der Middleware gespeichert sind.

In jedem der beschriebenen Verfahren kann der Diensteserver S vor dem Übermitteln des Authentikationstokens c von dem Authentikationsserver K an den Client C den Client C anweisen (Schritt 205), eine Verbindung mit dem Authentikationsserver K herzustellen (Schritt 207).

In jedem der beschriebenen Verfahren kann für das Übermitteln des Authentikationstokens c von dem Authentikationsserver K an den Client C, für das Übermitteln des Authentikationstokens c an den Diensteserver S, für das Überprüfen des Authentikationstokens c durch den Diensteserver S und/oder für das Übermitteln des Clientzertifikates certC ein manipulationsgeschützter Übermittlungskanal verwendet werden. Hierbei kann zumindest einer der manipulationsgeschützten Übermittlungskanäle mittels eines SSL- und/oder eines TLS-Protokolls bereitgestellt werden.

In jedem der beschriebenen Verfahren kann der Authentikationsserver K zum Übermitteln des Authentikationstokens c an den Client einen SET-COOKIE-Befehl (c = MAC_{KS}(pkC∥tcs)) mit einem DNS-Namen des Diensteservers S verwenden (Schritt 110).

In jedem der beschriebenen Verfahren kann der Client C das Authentikationstoken c als http-Cookie an den Diensteserver S übermitteln (Schritt 120).

Ein Authentikationsserver K zum Authentifizieren eines Client C gegenüber einem Diensteserver S, von dem der Client C eine Ressource anfordert, kann folgende Vorrichtungen umfassen: einen Authentikationstoken-Erzeuger zum Erzeugen eines Authentikationstokens c; eine Kryptographievorrichtung zum kryptographischen Binden des Authentikationstokens c an ein Geheimnis cid, das sich der Client C und der Authentikationsserver K teilen; und einen Authentikationstoken-Versender zum Senden des Authentikationstokens c an den Client C.

Ein Diensteserver S zum Authentifizieren eines Client C gegenüber einem Diensteserver S, von dem der Client C eine Ressource anfordert, kann folgende Vorrichtungen umfassen: einen Authentikationstoken-Empfänger zum Empfangen des Authentikationstokens c von dem Client C; einen Authentikationstoken-Überprüfer zum Überprüfen, ob das Authentikationstoken c kryptographisch an ein Geheimnis cid gebunden wurde, das sich der Client C und der Authentikationsserver K teilen; und einen Entscheider zum Entscheiden über eine Freigabe oder Nichtfreigabe der angeforderten Ressource unter Berücksichtigung eines Ergebnisses des Überprüfens durch den Diensteserver S.

Im Folgenden werden weitere Erläuterungen gegeben und weitere Ausführungsbeispiele beschrieben. Die Erfindung kann zur Implementierung einer Einmalanmeldung im Internet genutzt werden, bei der als einzige Client-Software ein Standard-Browser (bzw. ein Browser mit Standard-Erweiterungen) verwendet wird. Ähnliche Verfahren heißen "Microsoft Passport", "Microsoft Cardspace", "Liberty Alliance SSO" und "T-Online Netzausweis". Ein Authentifizieren der Nutzer ("user") vieler Diensteserver ("relying parties") kann auf einem zentralen Authentikationsserver ("identity provider") zentral durchgeführt werden. Das Ergebnis des Authentifizierens kann zusammen mit weiteren Daten an die Diensteserver weitergeleitet werden. Bei den bekannten Verfahren können Standard-Webtechnologien wie z.B. http-Cookies eingesetzt werden. Ohne weitere Sicherheitsmechanismen können diese Einmalanmeldungsverfahren unsicher sein, wenn diese Webtechnologien durch Angriffe wie Cross-Site-Scripting (XSS) oder Pharming kompromittiert werden können. Erfindungsgemäß können http-Cookies an ein Clientzertifikat gebunden werden. Das Clientzertifikat certC kann zur Authentisierung des Browsers des Client C sowohl beim Authentikationsserver K, als auch beim Diensteserver S eingesetzt werden. Über die hier beschriebene Technologie können die beiden voneinander unabhängigen SSL/TLS-Sitzungen verknüpft werden. Ein Sicherheitsgewinn kann darin bestehen, dass bekannte Angriffe das Einmalanmeldungsverfahren nicht mehr kompromittieren können, da zu einem erfolgreichen Authentifizieren die Kenntnis des zum Zertifikat gehörenden privaten Schlüssels erforderlich ist. Dieser Schlüssel ist über XSS oder Pharming nicht ermittelbar. Zum Schutz gegen Angriffe durch Trojanische Pferde kann dieser Schlüssel auf einer Chipkarte gespeichert werden.

An Einmalanmeldungsprotokollen (SSO protocols) beteiligen sich in der Regel mindestens folgende Teilnehmer:
- Ein Client C (Benutzer oder Kunde) ist ein Subjekt, das eine digitale Identität haben kann, welche es gegenüber einem Diensteserver S beweisen muss, um Zugang zu autorisierten Diensten oder Ressourcen zu erlangen. Der Client C kann durch einen menschlichen Benutzer repräsentiert werden, durch einen menschlichen Benutzer in Verbindung mit irgendeiner Anwendung (beispielsweise einem Browser), oder durch einen menschlichen Benutzer in Verbindung mit irgendeiner Anwendung, welche einen Hilfsdienst aufruft (wie eine Smart-Card- oder eine Browser-Erweiterung).
- Ein Diensteserver S (relying party) kann eine Website oder eine Anwendung sein, die digitale Identitäten von Clients C akzeptieren kann und auf die digitalen Identitäten vertrauen kann. Der Diensteserver S kann einem Client C mindestens eine Ressource oder Dienst zur Verfügung stellen (Schritt 250). Der Diensteserver S kann eine Identität benutzen, die mittels Aussagen repräsentiert sein kann, die in einem Authentikationstoken c enthalten sein können, um den Client C zu authentifizieren (Schritt 130). Der Diensteserver S kann dann eine Autorisierungsentscheidung treffen, wie eine Entscheidung, ob einem Zugriffgriff des Clients C auf eine Ressource oder auf einen Dienst des Diensteservers S zu erlauben oder nicht zu erlauben (Schritt 140).
- Ein Authentikationsserver K (identity provider) kann einem Client C eine digitale Identität zur Verfügung stellen. Der Authentikationsserver K kann eine Mittler-Partei sein, der Client C und Diensteserver S vertrauen. Der Authentikationsserver K kann sicherstellen, dass eine digitale Identität eines Clients C genau die behauptete ist. In einigen Szenarien mit niedrigem Sicherheitsniveau kann der Authentikationsserver K auch der Client C sein, der seine Identität selbst definiert und selbst herausgibt. Abhängig von den Anforderungen, können verschiedene Authentikationsserver K vorgesehen sein, um verschiedene Stufen der Sicherheit bereitzustellen.

Eines der Ziele von Einmalanmeldungsprotokollen ist das Authentifizieren eines Clients C gegenüber einem Diensteserver S. Dazu kann der Client C den Authentikationsserver K kontaktieren und ein Authentikationstoken c (security token) erhalten, welches Identitätsinformationen des Clients C enthalten kann (Schritt 110). Die Identitätsinformationen können Aussagen enthalten. Beispiele für Identitätsinformation sind Kreditkartennummern oder Lieferadressen. Das Authentikationstoken c kann dann an die Diensteserver S weitergeleitet werden (Schritt 120). Wenn der Client C über einen Standard-Webbrowser verbunden ist, können diese Protokolle als "browser-basierte Einmalanmeldungsprotokolle" (kurz BBSSO-Protokoll) bezeichnet werden. "Microsoft Passport", ein Nachfolger von "Cardspace", "Security Assertion Markup Language (SAML)", "Liberty Alliance Projekt", "Shibboleth Projekt" und "WS-Federation" sind Protokoll-Frameworks, die BBSSO unterstützen können.

Ein BBSSO-Protokoll kann folgende Ausführungsschritte umfassen:
- Schritt 1: Mittels eines Standard-Webbrowsers beantragt ein Client C Zugang zu einer Ressource oder einem Dienst, die/der durch einen Diensteserver S bereitgestellt wird (Schritt 202).
- Schritt 2: Der Diensteserver S fordert den Client C auf, durch Vorlegen eines entsprechenden Authentikationstokens c, das von dem Authentikationsserver K ausgestellt ist, einen Nachweis seiner digitalen Identität zu erbringen (Schritt 205).
- Schritt 3: Der Client C fordert das Authentikationstoken c vom Authentikationsserver K an (Schritt 310), um Zugriff auf die Ressource oder den Dienst zu erhalten, der von dem Diensteserver S bereitgestellt wird. Dies kann über einen handelsüblichen Webbrowser mit Standard Internet-Technologien oder über eine spezielle Middleware erfolgen (wie das MS Cardspace Plugin).
- Schritt 4: Der Authentikationsserver K stellt dem Client C das Authentikationstoken c aus (Schritt 110).
- Schritt 5: Der Client C präsentiert das Authentikationstoken c dem Diensteserver S unter Verwendung eines Standard-Webbrowsers (Schritt 120).
- Schritt 6: Der Diensteserver S gewährt dem Client C Zugang zu der geforderten Ressource oder dem geforderten Dienst (Schritt 250).

Sichere Kommunikationskanäle können über ein SSL/TLS-Protokoll aufgebaut werden, das ein sicheres Sitzungsprotokoll ist und von aktuellen Browsern unterstützt werden kann. Dieses kann einschließen, dass sich ein Client C entweder mit einem Clientzertifikat certC über eine Passworteingabe in ein Webformular oder über eine browser-spezifische Methode authentisiert, wie HTTP-Cookies, versteckte Formularfelder, dynamisch generierte Hyperlinks, im Browser-Cache gespeicherte Werte oder andere bekannte Methoden.

Im Folgenden wird ein Framework für browser-basierte SSO-Protokolle beschrieben, das im Folgenden mit BBSSO-Framework bezeichnet wird. Dabei werden folgende Eigenschaften angestrebt: Authentifizieren kann mit einer Schlüsselvereinbarung verknüpft werden. Ein Client kann sich gegenüber einem Authentikationsserver K mittels einer (kurz- oder langlebigen) Geheimidentifikation (identifying secret) authentifizieren (Schritt 310). Eine Authentifizierung gegenüber dem Diensteserver S kann mittels eines Authentikationstokens erfolgen (Schritt 120), das vom Authentikationsserver K ausgestellt werden kann (Schritt 110). Das Authentikationstoken c kann Aussagen bezüglich der Identitätsinformationen (security token) beinhalten, welche an ein Identifying Secret gebunden sein können. Daher kann in beiden SSL/TLS-Verbindungen eine Schlüsselvereinbarung an eine Authentifizierung durch das/(die Nutzung des) entsprechende(n) Identifying Secret(s) gebunden sein. Als Ergebnis kann eine kryptographische Vertrauensbeziehung zwischen dem Client C und dem Authentikationsserver K durch das Identifying Secret bestehen.

Das Authentikationstoken c kann eine Bindung von Aussagen über Identitätsinformationen (security token) an ein Clientzertifikat certC eines Browsers enthalten, welches in einem SSL/TLS-Handshake genutzt werden kann. Das Clientzertifikat certC kann einen Wert enthalten, der weltweit einzigartig sein kann und daher genutzt werden kann, um einen bestimmten Client C identifizieren zu können. Dieser Wert kann der im Zertifikat certC gespeicherte öffentliche Schlüssel (public key) pkC sein, wobei der zugehörige private Schlüssel (private key) skC nur dem Inhaber C des Zertifikates certC bekannt ist, also dem Browser. Verschiedene abgeleitete Werte des öffentlichen Schlüssels können genutzt werden, um für das erfindungsgemäße Verfahren eine Bindung zu erreichen. Beispielsweise kann dafür mindestens einer der folgenden Werte verwendet werden:
- Hash-Werte (von Teilen) des öffentlichen Schlüssels pkC, des gesamten Zertifikates certC oder Teilen des Zertifikates certC, die den Schlüssel pkC (oder Teile davon) enthalten;
- Verschlüsselungen (von Teilen) des öffentlichen Schlüssels pkC, des gesamten Zertifikates certC oder Teilen des Zertifikates certC, die den Schlüssel pkC (oder Teile davon) enthalten;
- digitale Signaturen (von Teilen) des öffentlichen Schlüssels pkC, des gesamten Zertifikates certC oder Teilen des Zertifikates certC, die den Schlüssel pkC (oder Teile davon) enthalten; und
- andere Werte, die abgeleitet werden können von Daten zusammen mit Teilen des öffentlichen Schlüssels pkC, vorausgesetzt, dass keine andere Methode bekannt ist, um ein anderes öffentliches Schlüssel/privates Schlüsselpaar pkC, skC zu finden, bei dem die Ableitung von anderen Daten kombiniert mit den gleichen Teilen des neuen öffentlichen Schlüssels pkC denselben Wert ergibt.

Der Einfachheit halber wird im Folgenden ohne Beschränkung der Allgemeinheit unterstellt, das ein vollständiger öffentlicher Schlüssel pkC als Information zur Herstellung einer Bindung zwischen Identitätsinformationen (security token) und einem Identifying Secret verwendet wird, das durch einen privaten Schlüssel skC dargestellt werden kann.

Zusätzlich zu einem zertifizierten öffentlichen Schlüssel pkC des Client C kann das Authentikationstoken c auch Aussagen zu den Identitätsinformationen (security token) und weitere Informationen enthalten, wie Authentikationsdaten, Autorisierungsdaten oder anderen Daten, die vom Authentikationsserver K ausgestellt worden sein können.

Kryptographischer Schutz des Authentikationstoken c: Im Authentikationstoken c kann der öffentliche Schlüssel pkC durch kryptographische Maßnahmen an die Aussagen über die Identitätsinformationen (security token) und an weitere Daten gebunden sein, beispielsweise mittels eines der folgenden Techniken:
- Verschlüsseln einer Kombination des öffentlichen Schlüssels pkC, Aussagen über Identitätsinformationen (security token) und weiterer Daten mit einem symmetrischen Schlüssel skC, der nur dem Authentikationsserver K und dem Diensteserver S bekannt ist;
- Berechnen eines Nachrichtenauthentisierungscodes (message authentication codes) (MAC) über eine Kombination des öffentlichen Schlüssels pKC, Aussagen über Identitätsinformationen (security token) und der weiteren Daten mit einem geheimen symmetrischen Schlüssel skC, der nur dem Authentikationsserver K und dem Diensteserver S bekannt ist;
- Berechnen einer digitalen Signatur über eine Kombination aus dem öffentlicher Schlüssel pkC, Aussagen über die Identitätsinformationen (security token) und die weiteren Daten mit einem geheimen privaten Schlüssel skC, den nur der Authentikationsserver K kennt; und
- andere Maßnahmen, die den öffentlichen Schlüssel pkC kryptographisch an die Aussagen über die Identitätsinformationen (security token) und die weiteren Daten binden.

Protokolle, die einem BBSSO-Framework entsprechen, können durch die folgenden Schritte in der Protokollausführung beschrieben werden, wobei der Client C einen Standard-Webbrowser C benutzt kann, der Identity Provider durch einen Authentikationsserver K dargestellt werden kann und die Diensteserver S durch Anwendungsserver dargestellt werden können:
1. Der Client C kann über einen eigenen Browser eine Ressource auf dem Diensteserver S anfragen (Schritt 202). Da die Ressource ein Authentifizieren verlangt, kann der Client C mittels einer https-URL zum Authentikationsserver K umgeleitet werden (Schritt 205). Dies entspricht den Schritten 1 und 2 in der obigen Beschreibung eines BBSSO-Protokolls.
2. Während eines SSL/TLS-Handshakes (Schritt 207) kann der Authentikationsserver K eine SSL/TLS-Client-Authentifizierung anfordern. Wenn die Authentifizierung erfolgreich ist (Schritt 310), kann der Authentikationsserver K ein kryptographisch geschütztes Authentikationstoken c ausstellen (Schritt 110), welches den öffentlichen Schlüssel pkC des Clientzertifikates certC des Client, das im SSL/TLS-Handshake genutzt wurde, sowie die Aussagen zu den Identitätsinformationen (security token) und weitere Daten umfassen kann. Der Authentikationsserver K kann den Client C dann zum Diensteserver S zurückleiten, und zwar unter Verwendung von SSL/TLS (Schritt 207, 110). Dies entspricht den Schritten 3 und 4 in der obigen Beschreibung eines BBSSO-Protokolls.
3. Auch der Diensteserver S kann für den SSL/TLS-Handshake eine Client-Authentifizierung anfragen (Schritt 215). Wenn der Handshake erfolgreich ist, kann der Browser des Client C das Authentikationstoken c an den Diensteserver S senden (Schritt 120), welcher die Authentizität des Authentikationstokens c verifizieren kann und den öffentlichen Schlüssel pkC des Authentikationstokens c mit dem öffentlicher Schlüssel pkC im Clientzertifikat certC vergleichen kann, das im SSL/TLS-Handshake genutzt wurde (Schritt 130). Wenn beide übereinstimmen, kann der Client C als authentifiziert bewertet werden (Schritt 140). Dies entspricht den Schritten 5 und 6 in der obigen Beschreibung eines BBSSO-Protokolls.

Sicherheitseigenschaften von Protokollen in einem BBSSO-Framework.

Wenn der Diensteserver S das kryptographisch gesicherte Authentikationstoken c erhält (Schritt 120), welches den zertifizierten öffentlichen Schlüssel pkC des Browsers, Aussagen über die Identitätsinformationen (security token) und weitere Daten enthalten kann, kann er durch die erfolgreiche Verifikation des Authentikationstokens c auf Folgendes schließen:
- Das Authentikationstoken c wurde vom Authentikationsserver K erstellt, denn es ist durch einen kryptographischen Wert geschützt, den nur der Authentikationsserver K und optional der Diensteserver S selbst berechnen kann.
- Das Authentikationstoken c wurde nach einer Interaktion des Authentikationsservers K mit dem Browser des Clients C ausgestellt, der sich durch Verwendung des öffentlichen Schlüssels pkC sowie Aussagen der Identitätsinformationen (security token) und mögliche weitere Daten erfolgreich selbst authentisiert hat (Schritte 110, 207, 210, 310).
- Derselbe öffentliche Schlüssel wurde in der aktuellen Authentifizierung des Browsers des Client C mit dem Diensteserver S genutzt (Schritt 215).
- Da angenommen wird, dass private Schlüssel skC sicher im Kryptographiemodul des Browsers des Client C gespeichert sind, wurde das Authentikationstoken c für diesen Browser ausgestellt (Schritt 110).

Im Folgenden werden mögliche Einwände gegen einen praktischen Einsatz eines BBSSO-Framework diskutiert.

Einwand 1: Wenn man SSL/TLS-Clientzertifikate einsetzt, braucht man keine weiteren SSO-Protokolle.

Dieser Einwand impliziert, dass Clientzertifikate eines Browsers innerhalb einer komplexen öffentlichen Schlüssel-Infrastruktur (PKI) eingesetzt werden. In diesem Kontext können alle Clientzertifikate eines Browsers von einer anerkannten Zertifizierungsstelle (certification authority = CA) ausgestellt werden, die einer klaren Sicherheitsrichtlinie für die Vergabe folgt. Diese Sicherheitsrichtlinie kann Basis für Sicherheitsentscheidungen des Diensteservers S sein, nämlich einen Zugriff auf Ressourcen zu erlauben oder zu verbieten. In der Praxis kann dieser Ansatz für geschlossene Netze funktionieren, wie eine Autorisierung in Firmen. Jedoch kann selbst hier ein administrativer Aufwand hoch sein.

Der erfindungsgemäße Ansatz unterscheidet sich davon: Protokolle des erfindungsgemäßen BBSSO-Frameworks können auch mit selbstsignierten Clientzertifikaten funktionieren. Diese Clientzertifikate können ohne Interaktion mit einer CA generiert werden und können als eindeutiges kryptographisches Identitätsmerkmal im Internet wirken.

Einwand 2: SSO-Protokolle machen nur Sinn, wenn sie von beliebigen Browsern genutzt werden können.

Dieser Einwand unterstellt, dass Benutzer sicherheitskritische Anwendungen von Orten wie Internet Cafes oder Hotelzimmern aus durchführen. Allerdings sind in diesem Szenario alle Protokolle unsicher, beispielsweise weil Tastenanschläge und Mausbewegungen aufgezeichnet werden können.

In der Praxis werden sicherheitsrelevante Anwendungen wie Online-Banking oder Musik-Downloads häufig nur von wenigen Rechnern je Nutzer durchgeführt, welche durch den Nutzer geschützt sind, wie Personal Computer im Büro oder zu Hause. Protokolle im BBSSO-Framework können diese Szenarien berücksichtigen, indem pro Nutzer eine kleine Anzahl unterschiedlicher Clientzertifikate unterstützt wird.

Nachfolgend beschreiben wir einige Implementierungsvarianten.

### a) BBSSO basierend auf registrierten öffentlichen Schlüsseln.

Ein BBSSO-Protokoll, welches mit dem BBSSO-Framework übereinstimmt, kann eine initiale Registrierungsphase erfordern, in welcher zumindest die folgenden Schritte durchgeführt werden:
Ein privates/öffentliches Schlüsselpaar (skC, pkC) des Browsers kann dem Client C zur Verfügung stehen. Der öffentliche Schlüssel pkC kann Teil des Clientzertifikats certC des Browsers sein, das dem Client C ebenfalls zur Verfügung stehen kann. Dieser öffentliche Schlüssel pkC kann mittels eines sicheren band-externen Authentifizierens (Out-of-band-Authentifizierung) mit dem Authentikationsserver K registriert werden. Das bedeutet, dass der Authentikationsserver K ebenfalls pkC kennen kann.

Ein privates/öffentliches Schlüsselpaar (skS, pkS) des Diensteservers S kann dem Diensteserver S zur Verfügung stehen. Der symmetrische Schlüssel kKS, der zwischen dem Authentikationsserver K und dem Diensteserver S (band-extern) out-of-band ausgetauscht wurde, kann dem Diensteserver S und dem Authentikationsserver K zur Verfügung stehen.

Ein privates/öffentliches Schlüsselpaar (skK, pkK) des Authentikationsservers K kann dem Authentikationsserver K zur Verfügung stehen.

Im Folgenden wird eine mögliche Ausführung eines BBSSO-Protokolls basierend auf einem registrierten öffentlichen Schlüssel pkC beschrieben.
1. Ein Client C kann das Protokoll initiieren, indem er eine URL vom Diensteserver S anfragt, die Authentifizieren verlangt (Schritt 202). Der Diensteserver S kann den Browser C anweisen, eine Verbindung mit dem Authentikationsserver K unter Nutzung einer SSL/TLS-Verbindung mittels eines REDIRECT-Statuscode herzustellen (Schritt 205).
2. Ein erster SSL-Handshake mit Client-Authentifizieren kann zwischen dem Client C und dem Authentikationsserver K ausgeführt werden (Schritt 207). Während dieses Handshakes kann der Authentikationsserver K das Clientzertifikat certC des Client C erfahren (Schritt 310) und den öffentlichen Schlüssel pkC des Client C extrahieren. Da das Protokoll im Client-Authentifizierungs-Modus durchgeführt wird, kann eine digitale Signatur durch den Client C mittels skC generiert und an den Authentikationsserver K gesendet werden. Eine erfolgreiche Verifikation dieser digitalen Signatur impliziert, dass C den entsprechenden privaten Schlüssel skC kennt.
3. Nach der erfolgreichen SSL/TLS-Handshake-Ausführung zwischen dem Client C und dem Authentikationsserver K (Schritt 207), kann der Authentikationsserver K prüfen, ob der öffentliche Schlüssel pkC, welcher von C während des Handshakes genutzt werden kann, einem der registrierten öffentlichen Schlüssel entspricht. Wenn ja, dann kann der Authentikationsserver K das Authentikationstoken c ausstellen und dieses kryptographisch an den öffentlichen Schlüssel von dem Client C unter Verwendung des geteilten symmetrischen Schlüssels kKC binden. Das Ergebnis kann als Textstring c kodiert werden und an C unter Verwendung des SET-COOKIE-Kommandos mit dem DNS-Namen von dem Diensteserver S gesendet werden (Schritt 110). Der Client C kann nun den Textstring c senden, wann immer er denkt, dass er mit dem Diensteserver S kommuniziert (Schritt 120).
4. Ein zweiter SSL/TLS-Handshake mit Client-Authentifizierung kann zwischen dem Client C und dem Diensteserver S durchgeführt werden (Schritt 215). Während des Handshakes kann der Diensteserver S das Clientzertifikat certC des Browsers erhalten und damit den öffentlichen Schlüssel pkC des Browsers auslesen. Da das Protokoll im Client-Authentifizierungs-Modus ausgeführt wird, kann der Client C unter Verwendung von skC eine digitale Signatur erzeugen und an den Diensteserver S senden. Eine erfolgreiche Verifikation dieser digitalen Signatur impliziert, dass der Client C den entsprechenden privaten Schlüssel skC kennt.
5. Nach einem erfolgreichen SSL/TLS-Handshake zwischen dem Client C und dem Diensteserver S (Schritt 215), kann der Client C den Textstring c als http-Cookie an den Diensteserver S senden (Schritt 120). Dazu braucht der SSL/TLS-Tunnel die vom Browser C gesendeten Daten nur authentifizieren; Vertraulichkeit ist nicht erforderlich. Der Diensteserver S kann den Textstring c unter Verwendung des Schlüssels kKS verifizieren (Schritt 130). Wenn die Bestätigung erfolgreich ist, kann der Diensteserver S den in dem Textstring c enthaltenen öffentlicher Schlüssel mit dem öffentlicher Schlüssel pkC vergleichen, welcher während des SSL/TLS-Handshakes zur Authentifizierung des Browsers C genutzt wurde. Wenn die Verifikation positiv ist, kann der Diensteserver S das Authentikationstoken, das durch den Textstring c repräsentiert ist, akzeptieren und dem Client C Zugang zur geforderten Ressource gewähren (Schritt 250).

Der SSL/TLS-Handshake mit Client-Authentifizierung (Schritt 207) kann eine wichtige Komponente für eine Sicherheit dieser Protokollversion sein. Das SSL/TLS-Protokoll hat den Vorteil, dass seine Sicherheit gegen viele Arten von Angriffen gut dokumentiert ist.

### b) BBSSO-Protokoll basierend auf einem registrierten Berechtigungsnachweis.

Diese Protokollvariante kann den Vorteil haben, dass der Browser seinen öffentlichen Schlüssel nicht im Voraus beim Authentikationsserver K registrieren muss. Es kann ein beliebiges im Browser gespeichertes Zertifikat genutzt werden, oder dieses Zertifikat kann neu erzeugt werden. Stattdessen kann unterstellt werden, dass der menschliche Benutzer zuvor einen Berechtigungsnachweis (zum Beispiel Nutzername/Passwort) beim Authentikationsserver K registriert hat. Das kann dem Benutzer erlauben, das BBSSO Protokoll von jedem Computer aus durchzuführen.

Ein Unterschied im Vergleich zu dem oben beschriebenen BBSSO-Protokoll, das auf einem registrierten öffentlicher Schlüssel pkC basiert, kann darin bestehen, dass nach erfolgreicher Durchführung des ersten SSL/TLS-Handshakes zwischen dem Client C und dem Authentikationsserver K (Schritt 207) der Authentikationsserver K eine Login-Anfrage über einen bestehenden, sicheren SST/TLS-Kanal an den Client C senden kann, die einem menschlichen Benutzer dann visuell dargestellt werden kann (Schritt 209). Der menschliche Benutzer kann seinen Berechtigungsnachweis eingeben (Schritt 211), und das Protokoll kann nach erfolgreicher Verifikation des Berechtigungsnachweises durch den Authentikationsserver K fortgesetzt werden.

### c) BBSSO-Protokoll basierend auf nicht-abstreitbaren Authentikationstoken.

In dieser Variante können Aussagen über Identitätsinformationen (Security token) an ein Geheimnis cid mit hoher Entropie gebunden werden, welches aus dem Verbindungskanal zwischen dem Client C und dem Diensteserver S abgeleitet werden kann. Diese Festlegung kann sicherstellen, dass der Diensteserver S überprüfen kann (Schritt 130), dass eine Partei, die das Login in der aktuellen Sitzung verlangen kann, wirklich eine Partei ist, die eine Ausstellung des Authentikationstokens c verlangt hat. Das Geheimnis cid kann ein kryptographischer Kanal-Identifizierer (cryptographic channel identifier) sein, der eine aktive Protokollsitzung bestimmen kann. Der Zweck dieses Identifizierers kann darin bestehen, einen Fingerabdruck des Kanals zu enthalten, wobei eine Validierung dieses Fingerabdrucks nur von den beiden Protokollteilnehmern C, K zusammen durchgeführt werden kann. Idealerweise können beide Teilnehmer C, K den cid aus einem gemeinsamen Geheimnis berechnen. Andernfalls kann ein interaktives Protokoll erforderlich sein, um den Identifizierer zu synchronisieren. Der Identifizierer kann von einem Mastersecret kmk abgeleitet werden, das während des SSL/TLS-Handshakes berechnet wird. Eine mögliche Herangehensweise kann darin bestehen, den Masterschlüssel erneut zu verwenden und den Kanalidentifizierer im Sinne der SSL/TLS-Spezifikation zu berechnen, z.B. als cid = PRF (kmk, 'channe_dentifier', rC|rS), wobei PRF die Pseudozufallsfunktion sein kann, die im SSL/TLS-Standard spezifiziert sein kann, 'channel_identifier' ein Trennstring sein kann, und rC|rS eine Verkettung von Zufallszahlen, die durch die Protokollteilnehmer C, K in ersten Runden des Handshake-Protokolls fixiert werden können. Unter der Annahme, dass die Pseudozufallsfunktion sicher ist, kann man zeigen, dass cid ein frischer Wert sein kann und ununterscheidbar von einer Zufallszahl sein kann. Das Mastersecret kann als Ausgangspunkt (seed) für eine Pseudozufallsfunktion benutzt werden, ohne das ursprüngliche Handshake-Protokoll zu ändern.

### d) BBSSO-Protokoll basierend auf einer speziellen Middleware.

In dieser Variante kann eine Kommunikation mit dem Authentikationsserver K mittels einer speziellen Middleware (wie das MS Cardspace-Plugin) durchgeführt werden, während eine Kommunikation mit dem Diensteserver S durch einen Standard-Webbrowser erfolgen kann.

Ein Vorteil dieser Variante kann sein, dass die Middleware einen legalen Identity Provider mittels kryptographischer Werte, die in der Middleware gespeichert sind, authentifizieren kann. Dieser Prozess kann einer sehr kleinen Public-Key-Infrastruktur ähneln. Mittels Kombination dieser Authentifizierung mit dem Aufbau einer sicheren (vertraulichen und verlässlichen) Verbindung kann ein Angreifer ohne direkten Zugriff auf das Betriebssystem des PCs, auf dem die Middleware läuft, die Verbindung nicht angreifen.

Allerdings kann ein Angreifer den Standard-Browser selbst angreifen, mittels:
- Cross Site Scripting (XSS) um Zugang zum Authentikationstoken c zu erhalten, dass im Dokument Object Model (DOM) des Browsers gespeichert ist;
- Pharming/DNS Spoofing/PKI Spoofmg um das Authentikations-Cookie abzufangen, wenn es übertragen wird;
- einer Kombination aus beidem mittels dynamischen Pharmings.

Das vom Authentikationsserver K ausgestellte Authentikationstoken c kann kryptographisch an einen SSL/TLS-Parameter gebunden sein. In diesem Falle kann das auch ein nicht-persistenter Wert sein, der nur in einer SSL/TLS-Sitzung zwischen dem Browser und den Diensteserver S gültig ist, zum Beispiel der Session Identifier STD.

Ein Protokollablauf kann wie folgt aussehen:
1. Der Client C stellt eine SSL/TLS-Verbindung mit oder ohne Client-Authentifizierung zum Diensteserver S her (Schritt 202).
2. Der Diensteserver S leitet den Client C an den Authentikationsserver K um (Schritt 205). Die Authentizität des Authentikationsservers K wird verifiziert, entweder im Browser des Client C, über die Standard-PKI-Methode (Schritt 207) oder mittels einer Middleware, die mit dem Authentikationsserver K kommuniziert (Schritt 210).
3. Der Client C bindet die SSL/TLS-Session-ID (SID oder einen anderen geeigneten Parameter) aus der SSL/TLS-Sitzung zwischen dem Browser des Client C und dem Diensteserver S in die Anfragen an den Authentikationsserver K ein (Schritt 310).
4. Der Authentikationsserver K bindet SID kryptographisch an das ausgestellte Authentikationstoken c (Schritt 110).
5. Der Client sendet über eine SSL/TLS-Sitzung, die mit dem verkürzten Handshake-Protokoll unter Verwendung der Session-ID SID aufgebaut wird (Schritt 215), das Ticket an den Diensteserver S (Schritt 120).

Dieses Protokoll kann gegen Angriffe sicher sein, da ein Angreifer nur als MITM zwischen dem Client C und dem Diensteserver S agieren kann; jedoch kann dieser nicht die Session-ID SID beeinflussen, welche von dem legalen Diensteserver S gesendet wird (Schritt 205).

Weitere Ausführungsformen des Protokolls sind folgende:
- Browser-basiertes SSO-Protokoll, bei dem ein Diensteserver S eine Authentifizierung eines Clients C an einen Authentikationsserver K delegiert (Schritt 205), und zur Kommunikation zwischen dem Client C und dem Diensteserver S nur Standardmechanismen eines Webbrowsers des Clients C genutzt werden, und zur Kommunikation zwischen dem Client C und dem Authentikationsserver K nur die Standardmechanismen des Webbrowsers C oder eines Standard-Plugins des Clients C genutzt werden, dadurch gekennzeichnet, dass zwischen dem Client C und dem Diensteserver S eine SSL/TLS-Verbindung aufgebaut wird (Schritt 215), und dass die von dem Authentikationsserver K an den Diensteserver S über den Client C übermittelten Authentifizierungs- und Autorisierungsdaten an nicht fälschbare Parameter aus dieser SSL/TLS-Verbindung kryptographisch gebunden sind.
- Browser-basiertes SSO-Protokoll, bei dem ein Diensteserver S eine Authentifizierung eines Clients C an einen Authentikationsserver K delegiert (Schritt 205), und zur Kommunikation zwischen dem Client C und dem Diensteserver S und zwischen dem Client C und dem Authentikationsserver K nur Standardmechanismen eines Webbrowsers des Client C genutzt werden, dadurch gekennzeichnet, dass zwischen dem Client C und dem Authentikationsserver K und zwischen dem Client C und dem Diensteserver S jeweils SSL/TLS-Verbindungen (Schritte 207, 215) mit Authentifizierung des Client C mithilfe eines öffentlichen Schlüssels pkC des Clients C aufgebaut werden; ein aus dem öffentlichen Schlüssel pkC oder aus Teilen des öffentlichen Schlüssels pkC abgeleiteter Wert als Identifikator IC verwendet wird; und dass von dem Authentikationsserver K an den Diensteserver S über den Client C übermittelte Authentifizierungs- und Autorisierungsdaten (Schritt 110) an den Identifikator IC kryptographisch gebunden sind.

Detaillierte Betrachtung von Sicherheitsproblemen konventioneller Frameworks.

Kormann, D. und Rubin, A. konnten in (Risks of the passport single sign on protocol; Computer Networks, 33(1{6):51{58,2000) zeigen, dass Microsoft .NET Passport, eine Web-basierte Realisierung des Kerberos-Protokolls für SSO, anfällig sein kann für Angriffe, in denen ein Angreifer das Ticket Granting Ticket Cookie stiehlt. So ein Angriff kann die Tatsache ausnutzen, dass der Browser das Cookie mittels "SOP enforcement" (SOP = same origin policy) offenlegt. Das kann bedeuten, dass ein Angreifer, der den Domain Namen manipuliert, den Browser zwingt, dass Ticket Granting Cookie zu offenbaren. Im Ergebnis kann der Angreifer den Client mittels erneuter Übergabe des gestohlenen Cookies impersonifizieren.

Groß, T. konnte in (Security analysis of the SAML single sign-on browser/artifact profile; Annual Computer Security Applications Conference; IEEE Computer Society, 2003) zeigen, dass das Protokoll SAML verwundbar sein kann mittels adaptiver Angriffe, in denen der Angreifer ein Authentikationstoken abfängt, das in der URL enthalten sein kann. Groß verwendet die Tatsache, dass Browser die URL als Referenzgeber (Referrer-Tag) der http-Antwort hinzufügen können, wenn sie weitergeleitet werden. Somit kann ein MITM-Angreifer (MITM = man in the middle), der dem Browser signalisiert, dass die Anfrage an einen anderen Server weitergeleitet werden soll, das Authentikationstoken aus dem Referrer-Tag auslesen.

Groß, T. und Pfitzmann, B. haben SAML 2.0 analysiert und in (SAML artifact information flow revisited; IEEE Workshop on Web Services Security, Berkely, USA, MAY 2006; auch in IBM Research Report RZ 3643 (#99653)01/03/06, IBM Research Division, Zürich, January 2006) weitere Schwachstellen des Browsers/Artefakt-Profils beschrieben.

Pfitzmann, B. und Waidner, M. konnten in (Analysis of liberty single-sign-on with enabled clients, IEEE Internet Computing, 7(6):38-44, 2003) zeigen, dass eine ursprüngliche Version des Liberty Protokolls mit "enabled clients" (V 1.0) anfällig ist gegenüber MITM-Angriffen. Ein Angreifer, der die Rolle des Service Providers für den Client spielt, erhält ein Authentikationstoken und kann es an Diensteserver weitergeben (replay), um Zugang zu einem Dienst anstelle des Clients zu erhalten.

Soghoian, C. und Jakobsson, M. haben in (A deceit-augment man in the middle attack against bank of america's sitekey service, 2007) das Site-Key-Protokoll untersucht, das ein Zwei-Parteien-Authentifizierungsprotokoll ist, welches zusätzlich zu Server-Zertifikaten ein zuvor vereinbartes Bild darstellen kann, um dem Client zu signalisieren, dass er mit dem echten Server verbunden ist. Die Autoren konnten zeigen, dass das in einem Cookie gespeicherte, gemeinsame Geheimnis gestohlen werden kann. Auch hier können Schwächen der Durchsetzung der same origin policy (SOP) ausgenutzt werden.

Gajek, S. et. al. konnten in (On the Insecurity of Microsoft's Identity Metasystem CardSpace, Horst Götz Institute of IT-Security, HGI TR-2008-004, 2008) zeigen, dass das Cardspace-Protokoll, der Nachfolger des .NET Passport Protokolls, einige Mängel aufweist. Insbesondere wird gezeigt, dass browser-basierte Protokollvarianten es einem Angreifer ermöglichen können, das Authentikationstoken zu erhalten, und zwar unter gleichen vernünftigen Annahmen, wie die, welche von Korman und Rubin getroffen wurden, um die Sicherheit des .NET Passport Protokolls zu brechen. Der Grund ist auch hier eine lückenhafte Durchsetzung der same origin policy. Der Angreifer kann den Browser täuschen und eine Übertragung eines Authentikationstokens abfangen.

### Bezuqszeichen:

- certC -: Zertifikat des Client C
- C -: Client
- CA -: Zertifizierungsstelle
- kKC -: symmetrische Schlüssel zwischen K und C (Austausch band-extern)
- kKS -: symmetrische Schlüssel zwischen K und S (Austausch band-extern)
- K -: Authentikationsserver
- skC/pkC -: privates/öffentliches Schlüsselpaar des Client C
- skK/pkK -: privates/öffentliches Schlüsselpaar des Authentikationsservers K
- skS/pkS -: privates/öffentliches Schlüsselpaar des Diensteservers S
- S -: Diensteserver

## Patentansprüche

1. Verfahren zum Authentifizieren eines Client (C) gegenüber einem Diensteserver (S), von dem der Client (C) eine Ressource anfordert, wobei das Verfahren folgende Schritte umfasst:
- Ein Authentikationsserver (K) bindet vor dem Übermitteln (Schritt 110) eines Authentikationstokens (c) an den Client (C) das Authentikationstoken (c) kryptographisch an ein Geheimnis (cid), das sich der Client (C) und der Authentikationsserver (K) teilen;
- das Geheimnis (cid) umfasst eine Kanalidentität und/oder eine Sitzungsidentität;
- das Geheimnis (cid) wird mittels eines interaktiven Protokolls synchronisiert;
- das Geheimnis (cid) wird von einem Hauptgeheimnis abgeleitet, indem das Hauptgeheimnis als Ausgangspunkt (seed) für eine Pseudozufallsfunktion benutzt wird;
- Übermitteln (Schritt 110) des Authentikationstokens (c) von dem Authentikationsserver (K) an den Client (C);
- Übermitteln (Schritt 120) des Authentikationstokens (c) von dem Client (C) an den Diensteserver (S);
- Überprüfen (Schritt 130) des Authentikationstokens (c) durch den Diensteserver (S); und
- Entscheiden (Schritt 140) über eine Freigabe oder Nichtfreigabe der angeforderten Ressource unter Berücksichtigung eines Ergebnisses des Überprüfens durch den Diensteserver (S).

2. Verfahren gemäß Anspruch 1, wobei vor dem Übermitteln (Schritt 110) des Authentikationstokens (c) von dem Authentikationsserver (K) an den Client (C) eine Login-Abfrage zwischen Client (C) und Authentikationsserver (K) durchgeführt wird (Schritt 210).

3. Verfahren gemäß Anspruch 1 oder 2, wobei der Client (C) vor dem Übermitteln (Schritt 110) des Authentikationstokens (c) von dem Authentikationsserver (K) an den Client (C) dem Authentikationsserver (K) ein Clientzertifikat (certC) und eine digitale Signatur (dS) übermittelt (Schritt 310).

4. Verfahren gemäß Anspruch 3, wobei der Authentikationsserver (K) vor dem Übermitteln (Schritt 110) des Authentikationstokens (c) die digitale Signatur (dS) unter Berücksichtigung des Clientzertifikates (certC) überprüft und das Authentikationstoken (c) nur dann an den Client (C) übermittelt (Schritt 110), wenn das Überprüfen der digitalen Signatur (dS) eine Echtheit der digitalen Signatur (dS) bestätigte.

5. Verfahren gemäß einem der Ansprüche 1 bis 4, wobei der Authentikationsserver (K) vor dem Übermitteln (Schritt 110) des Authentikationstokens (c) an den Client (C) das Authentikationstoken (c) kryptographisch an einen öffentlichen Schlüssel (pKC) des Client (C) bindet.

6. Verfahren gemäß Anspruch 5, wobei die Login-Abfrage zwischen dem Client (C) und dem Authentikationsserver (K), das Übermitteln des Clientzertifikates (certC) und der digitalen Signatur (dS) von dem Client (C) zu dem Authentikationsserver (K), das Überprüfen der digitalen Signatur (dS) durch den Authentikationsserver (K), das kryptographische Binden des Authentikationstokens (c) an den öffentlichen Schlüssel (pKC) des Clients (C) und/oder das Übermitteln des Authentikationstokens (c) an den Client (C) mittels einer Middleware erfolgt, welche einen Client (C) und/oder einen Authentikationsserver (S) mittels kryptographischer Werte authentifizieren kann, die in der Middleware gespeichert sind.

7. Verfahren gemäß einem der Ansprüche 1 bis 6 wobei der Diensteserver (S) vor dem Übermitteln (Schritt 110) des Authentikationstokens (c) von dem Authentikationsserver (K) an den Client (C) den Client (C) anweist (Schritt 205), eine Verbindung mit dem Authentikationsserver (K) herzustellen (Schritt 207).

8. Verfahren gemäß einem der Ansprüche 1 bis 7, wobei für das Übermitteln (Schritt 110) des Authentikationstokens (c) von dem Authentikationsserver (K) an den Client (C), für das Übermitteln (Schritt 120) des Authentikationstokens (c) an den Diensteserver (S), für das Überprüfen (Schritt 130) des Authentikationstokens (c) durch den Diensteserver (S) und/oder Übermitteln (Schritt 310) des Clientzertifikates (certC) ein manipulationsgeschützter Übermittlungskanal verwendet wird.

9. Verfahren gemäß Anspruch 8, wobei zumindest einer der manipulationsgeschützten Übermittlungskanäle mittels eines SSL-und/oder TLS-Protokolls bereitgestellt wird (Schritte 207, 215).

10. Verfahren gemäß einem der Ansprüche 1 bis 9, wobei der Authentikationsserver (K) zum Übermitteln des Authentikationstokens (c) an den Client einen SET-COOKIE-Befehl mit einem DNS-Namen des Diensteserver (S) verwendet (Schritt 110).

11. Verfahren gemäß einem der Ansprüche 1 bis 10, wobei der Client (C) das Authentikationstokens (c) als http-Cookie an den Diensteserver (S) übermittelt (Schritt 120).

## Claims

1. Method for authenticating a client (C) with respect to a service server (S) from which the client (C) requests a resource, wherein the method comprises the following steps:
- before the transmission (step 110) of an authentication token (c) to the client (C), an authentication server (K) cryptographically attaches the authentication token (c) to a secret (cid) shared between the client (C) and the authentication server (K);
- the secret (cid) comprises a channel identity and/or a session identity;
- the secret (cid) is synchronised by means of an interactive protocol;
- the secret (cid) is derived from a main secret via the use of the main secret as a starting point (seed) for a pseudo-random function;
- transmission (step 110) of the authentication token (c) from the authentication server (K) to the client (C);
- transmission (step 120) of the authentication token (c) from the client (C) to the service server (S);
- verification (step 130) of the authentication token (c) by the service server (S); and
- deciding (step 140) whether to release or not to release the requested resource taking into account a result of the verification by the service server (S).

2. Method according to claim 1, wherein, prior to the transmission (step 110) of the authentication token (c) from the authentication server (K) to the client (C), a login query between the client (C) and the authentication server (K) is performed (step 210).

3. Method according to claim 1 or 2, wherein the client (C) transmits (step 310) a client certificate (certC) and a digital signature (dS) to the authentication server (K) before the authentication token (c) is transmitted (step 110) from the authentication server (K) to the client (C).

4. Method according to claim 3, wherein the authentication server (K) verifies the digital signature (dS) prior to transmitting (step 110) the authentication token (c), taking into account the client certificate (certC), and transmits (step 110) the authentication token (c) to the client (C) only if the verification of the digital signature (dS) has confirmed an authenticity of the digital signature (dS).

5. Method according to any of claims 1 to 4, wherein the authentication server (K) cryptographically attaches the authentication token (c) to a public key (pKC) of the client (C) prior to transmitting (step 110) the authentication token (c) to the client (C).

6. Method according to claim 5, wherein the login request between the client (C) and the authentication server (K), the transmission of the client certificate (certC) and the digital signature (dS) from the client (C) to the authentication server (K), the verification of the digital signature (dS) by the authentication server (K), the cryptographic attachment of the authentication token (c) to the public key (pKC) of the client (C) and/or the transmission of the authentication token (c) to the client (C) are carried out using middleware which can authenticate a client (C) and/or an authentication server (S) by means of cryptographic values which are stored in the middleware.

7. Method according to any of claims 1 to 6, wherein the service server (S) instructs (step 205) the client (C) to connect (step 207) to the authentication server (K) prior to the transmission (step 110) of the authentication token (c) from the authentication server (K) to the client (C).

8. Method according to any one of claims 1 to 7, wherein a manipulation-protected transmission channel is used for the transmission (step 110) of the authentication token (c) from the authentication server (K) to the client (C), for the transmission (step 120) of the authentication token (c) to the service server (S), for the verification (step 130) of the authentication token (c) by the service server (S) and/or for the transmission (step 310) of the client certificate (certC).

9. Method according to claim 8, wherein at least one of the manipulation-protected transmission channels is provided by an SSL and/or TLS protocol (steps 207, 215).

10. Method according to any of claims 1 to 9, wherein the authentication server (K) uses (step 110) a SET COOKIE command having a DNS name of the service server (S) to transmit the authentication token (c) to the client.

11. Method according to any of claims 1 to 10, wherein the client (C) transmits (step 120) the authentication token (c) as an http cookie to the service server (S).

## Revendications

1. Procédé d'authentification d'un client (C) auprès d'un serveur de services (S) auquel le client (C) demande une ressource, lequel procédé comprend les étapes suivantes :
- avant la transmission (étape 110) d'un jeton d'authentification (c) au client (C), un serveur d'authentification (K) lie de manière cryptographique le jeton d'authentification (c) à un secret (cid) que se partagent le client (C) et le serveur d'authentification (K) ;
- le secret (cid) comprend une identité de canal et/ou une identité de session ;
- le secret (cid) est synchronisé au moyen d'un protocole interactif ;
- le secret (cid) est déduit d'un secret principal, du fait que le secret principal est utilisé comme point de départ (seed) pour une fonction pseudo-aléatoire ;
- transmission (étape 110) du jeton d'authentification (c) par le serveur d'authentification (K) au client (C) ;
- transmission (étape 120) du jeton d'authentification (c) par le client (C) au serveur de services (S) ;
- vérification (étape 130) du jeton d'authentification (c) par le serveur de services (S) ; et
- décision (étape 140) sur une libération ou non-libération de la ressource demandée en tenant compte d'un résultat de la vérification par le serveur de services (S).

2. Procédé selon la revendication 1, dans lequel, avant la transmission (étape 110) du jeton d'authentification (c) par le serveur d'authentification (K) au client (C), une interrogation de connexion est effectuée (étape 210) entre le client (C) et le serveur d'authentification (K).

3. Procédé selon la revendication 1 ou 2, dans lequel, avant la transmission (étape 110) du jeton d'authentification (c) par le serveur d'authentification (K) au client (C), le client (C) transmet (étape 310) un certificat de client (certC) et une signature numérique (dS) au serveur d'authentification (K).

4. Procédé selon la revendication 3, dans lequel, avant la transmission (étape 110) du jeton d'authentification (c), le serveur d'authentification (K) vérifie la signature numérique (dS) en tenant compte du certificat de client (certC) et il ne transmet ensuite (étape 110) le jeton d'authentification (c) au client (C) que si la vérification de la signature numérique (dS) a confirmé l'authenticité de la signature numérique (dS).

5. Procédé selon l'une quelconque des revendications 1 à 4, dans lequel, avant la transmission (étape 110) du jeton d'authentification (c) au client (C), le serveur d'authentification (K) lie le jeton d'authentification (c) de manière cryptographique à une clé publique (pKC) du client (C).

6. Procédé selon la revendication 5, dans lequel l'interrogation de connexion entre le client (C) et le serveur d'authentification (K), la transmission du certificat de client (certC) et de la signature numérique (dS) par le client (C) au serveur d'authentification (K), la vérification de la signature numérique (dS) par le serveur d'authentification (K), la liaison cryptographique du jeton d'authentification (c) à la clé publique (pKC) du client (C) et/ou la transmission du jeton d'authentification (c) au client (C) s'effectuent au moyen d'un logiciel médiateur qui peut authentifier un client (C) et/ou un serveur d'authentification (S) au moyen de valeurs cryptographiques qui sont mémorisées dans le logiciel médiateur.

7. Procédé selon l'une quelconque des revendications 1 à 6, dans lequel, avant la transmission (étape 110) du jeton d'authentification (c) par le serveur d'authentification (K) au client (C), le serveur de services (S) invite (étape 205) le client (C) à établir (étape 207) une liaison avec le serveur d'authentification (K).

8. Procédé selon l'une quelconque des revendications 1 à 7, dans lequel, pour la transmission (étape 110) du jeton d'authentification (c) par le serveur d'authentification (K) au client (C), pour la transmission (étape 120) du jeton d'authentification (c) au serveur de services (S), pour la vérification (étape 130) du jeton d'authentification (c) par le serveur de services (S) et/ou pour la transmission (étape 310) du certificat de client (certC), un canal de transmission protégé contre les manipulations est utilisé.

9. Procédé selon la revendication 8, dans lequel au moins l'un des canaux de transmission protégés contre les manipulations est mis à disposition (étapes 207, 215) au moyen d'un protocole SSL et/ou TLS.

10. Procédé selon l'une quelconque des revendications 1 à 9, dans lequel le serveur d'authentification (K) utilise (étape 110) pour la transmission du jeton d'authentification (c) au client une instruction SET-COOKIE avec un nom DNS du serveur de services (S).

11. Procédé selon l'une quelconque des revendications 1 à 10, dans lequel le client (C) transmet (étape 120) au serveur de services (S) le jeton d'authentification (c) sous forme de Cookie http.
